# EUROPÄISCHE PATENTSCHRIFT

(11) **EP 1 961 594 B1**
(45) Veröffentlichungstag und Bekanntmachung des Hinweises auf die Patenterteilung: **03.08.2011**
(21) Anmeldenummer: 08003453.1
(22) Anmeldetag: 26.02.2008
(51) Int. Cl.: B60H 1/00

(54) **Luftkanal, insbesondere für ein Kraftfahrzeug**
Air duct, especially for a vehicle
Conduit d'air, notamment pour un véhicule automobile

(30) Priorität: 26.02.2007 DE 102007009613
(43) Veröffentlichungstag der Anmeldung: 27.08.2008
(73) Patentinhaber: Behr GmbH & Co. KG, 70469 Stuttgart (DE)
(72) Erfinder: Burr, Reinhold, 89522 Heidenheim (DE); Liermann, Andreas, 67117 Limburgerhof (DE); Lochmahr, Karl, 71665 Vaihingen/Enz (DE); Pitz, Eric, 70199 Stuttgart (DE)
(74) Vertreter: Grauel, Andreas

(56) Entgegenhaltungen:
- EP-A- 1 561 618
- DE-A1- 19 531 518
- DE-A1- 19 957 875
- DE-U1-202005 015 709
- FR-A- 2 841 184
- US-A1- 2003 029 319

## Beschreibung

Die Erfindung betrifft einen Luftkanal, insbesondere für ein Kraftfahrzeug.

Aus der DE 103 27 122 A1 ist eine Belüftungsvorrichtung, insbesondere zum Beduften eines Kraftfahrzeugs, bekannt, welche einen Duftstoff enthält, mit einer Dosiereinrichtung, wobei die Beduftungsvorrichtung zumindest einen Hohlkörper, der mit mindestens einer Öffnung versehen ist, und ein Element, insbesondere einen Hohlkörper, mit mindestens einer weiteren Öffnung um-fasst. Dabei ist der Hohlkörper und/oder das Element mittels eines Motors derart antreibbar, dass eine Relativbewegung zwischen dem Hohlkörper und dem Element möglich ist, so dass die beiden Öffnungen in zumindest einer Stellung der Relativbewegung ein Austreten von Duftstoff von innen nach außen ermöglichen. Der Duftstoff selbst ist innerhalb des Hohlkörpers in einer Duftstoffpatrone oder -kartusche angeordnet, die bei Bedarf auswechselbar ist.

Eine andere Beduftungsvorrichtung ist aus der US 5,314,669 A bekannt. Bei dieser Beduftungsvorrichtung sind zwei in axialer Richtung zueinander angeordnete Hohlzylinder in einem im Wesentlichen als Hohlzylinder ausgebildeten Gehäuse drehbar aufgenommen. Der das Gehäuse bildende Hohlzylinder weist zwei rechteckförmige, sich in Längsrichtung erstreckenden Öffnungen in seiner Mantelfläche auf einander gegenüberliegenden Seiten auf, die sich jeweils zumindest über einen Teilbereich der inneren Hohlzylinder erstrecken. Die inneren Hohlzylinder weisen ebenfalls jeweils zwei einander gegenüberliegende Öffnungen in ihren Mantelflächen auf, die jedoch gestuft ausgebildet sind, d.h. die Form dreier jeweils um die Hälfte ihrer Länge versetzt zueinander angeordneter, langgestreckter und zusammen eine gemeinsame Öffnung bildender Rechtecke aufweisen. Die Öffnungen der inneren Hohlzylinder sind verdreht zueinander angeordnet, so dass verschiedene Beduftungsvariationen möglich sind.

Die US 5,178,327 A offenbart ein Beduftungssystem mit einem in mehrere Sektoren unterteilten, drehbar in einem Gehäuse angeordneten Hohlzylinder, wobei mindestens ein kuchenartiger Teil des Hohlzylinders in der Größe eines Segments fehlt, weshalb auf den Hohlzylinder im Folgenden als Teil-Hohlzylinder Bezug genommen wird. Die Segmente sind jeweils stirnseitig offen und in jedem der Segmente ist ein anderer Duftstoff eingelagert. Im Gehäuse ist auf einer oder beiden Seiten in axialer Richtung des Teil-Hohlzylinders eine in Ihrer Gestalt im Wesentlichen dem Querschnitt eines Segments entsprechende Öffnung ausgebildet. Um einen Raum zu beduften, wird das den gewünschten Duft enthaltende Segment vor die Öffnung gedreht. Wird keine Beduftung gewünscht, so wird das fehlende Segment vor die Öffnung gedreht. Um eine stärkere Beduftung eines Raumes zu ermöglichen, kann auch ein Lüfter vorgesehen sein, welches Luft durch die erste Öffnung in das Gehäuse und nach dem Durchströmen des Teil-Hohlzylinders durch die zweite, gegenüberliegende Öffnung dem zu beduftenden Raum zuführt.

DE 195 31 518 offenbart einen Luftkanal nach dem Oberbegriff des Anspruchs 1.

Es ist Aufgabe der Erfindung, die Beduftung eines Raumes, insbesondere eines Fahrzeuginnenraumes, zu verbessern.

Diese Aufgabe wird gelöst durch einen Luftkanal mit den Merkmalen des Anspruchs 1.

Erfindungsgemäß ist ein Luftkanal mit mindestens einer Längstrennwand zur Unterteilung des Luftkanals in mindestens einen Belüftungskanal und mindestens einen Beduftungskanal versehen und weist mindestens eine Luftbehandlungsvorrichtung zur Änderung der chemischen Zusammensetzung eines durch den Beduftungskanal strömenden Luftstroms auf. Insbesondere weist der Luftkanal jeweils zwei oder mehr Beduftungskanäle und/oder Belüftungskanäle und/oder Luftbehandlungsvorrichtungen auf.

Eine derartige Anordnung ist insbesondere bevorzugt für den Innenraum eines Fahrzeugs, insbesondere eines Kraftfahrzeugs, vorgesehen. Bei dem Luftkanal handelt es sich hierbei bevorzugt um einen Luftkanal, der von der Klimaanlage, mittels welcher die dem Fahrzeuginnenraum zuzuführende Luft temperiert wird, zu einem Ausströmer, insbesondere bevorzugt zu der Mitteldüse, führt. Der Beduftungsvorrichtung ist durch die integrierte Anordnung in einem Beduftungskanal, der seinerseits in einem Belüftungskanal angeordnet , dass keine zusätzliche Kanalführung samt einem ggf. erforderlichen, zusätzlichen Gebläse erforderlich ist. Die Duftintensität lässt sich einfach und anforderungsgemäß über den Luftstrom, der durch den Beduftungskanal strömt einstellen, da die Daten der Gebläsedrehzahl und der einzelnen Klappenstellungen und ggf. weiterer Parameter, in deren Abhängigkeit die Duftintensität geregelt, insbesondere variiert, eingestellt und/oder gesteuert werden soll, wie bspw. Innen-/Außentemperatur, Fahrgeschwindigkeit, Sonneneinstrahlung, Jahreszeit, bereits bekannt sind. Vorteilhaft ist zudem, dass die bereits temperierte Luft den Duftstoff auf- und mitnimmt.

Gemäß einer bevorzugten Ausführungsform ist die Luftbehandlungsvorrichtung als Beduftungsvorrichtung und/oder Luftionisator ausgebildet.

Gemäß einer bevorzugten Ausführungsform ist die Luftbehandlungsvorrichtung in dem Beduftungskanal und/oder an dessen Eintrittsöffnung und/oder an dessen Austrittsöffnung angeordnet.

Insbesondere bevorzugt ist die Eintrittsöffnung des Beduftungskanals in einer Ebene mit der oder den Eintrittsöffnungen zum Belüftungskanal angeordnet. Dies ermöglicht eine einfache, integrierte Anordnung des Beduftungskanals im Belüftungskanal.

Der Luftstrom durch den Beduftungskanal ist vorzugsweise mittels einer Klappe oder dergleichen Luftstromsteuerelement regelbar, die insbesondere am luftan- oder -abströmseitigen Ende des Beduftungskanals angeordnet ist. Der Luftstrom durch den Belüftungskanal ist vorzugsweise mittels einer Klappe oder dergleichen Luftstromsteuerelement regelbar, die insbesondere am luftan- oder -abströmseitigen Ende des Belüftungskanals angeordnet ist. Die Stellbewegungen jeder Klappe können mit den Stellbewegungen anderer Klappen gekoppelt sein. Alternativ ist jedoch auch eine (im Wesentlichen) unabhängige Regelung der Klappenstellbewegung der Beduftungsklappe möglich.

Die Schwenkachsen der Klappen mittels derer der Luftstrom durch den Belüftungskanal bzw. den Beduftungskanal regelbar ist, sind vorzugsweise parallel in einer Ebene verlaufend oder miteinander fluchtend angeordnet, wodurch sich eine relativ einfache Anordnung der Stellorgane ergibt und eine Koppelung einzelner Klappen bauraumsparend möglich ist.

Besonders bevorzugt ist der Beduftungskanal den Belüftungskanal in zwei luftdurchströmbare Bereiche unterteilt. Insbesondere bevorzugt ist der Beduftungskanal hierbei zentral im Belüftungskanal angeordnet, wodurch sich eine optimierte Ausnutzung des Bauraums ergibt.

Die Beduftungsvorrichtung ist in einem luftabströmseitigen Bereich des Beduftungskanals angeordnet. Dies ermöglicht unter anderem einen einfachen Zugang, insbesondere bevorzugt vom Innenraum her mittels Ausbau des Ausströmers hinter dem der Beduftungskanal angeordnet ist, um den Duftstoff zu wechseln oder ggf. Wartungsarbeiten durchzuführen.

Bevorzugt wird der erfindungsgemäße Luftkanal in einen Querträger, einen Luftausströmer, eine Belüftungsanlage oder eine Klimaanlage, besonders bevorzugt in einem Kraftfahrzeug eingesetzt

Im Folgenden wird die Erfindung anhand von Ausführungsbeispielen, teilweise unter Bezugnahme auf die Zeichnung, im Einzelnen erläutert. Es zeigen:
- Fig. 1: eine ausschnittsweise, schematische Darstellung der Anordnung eines Belüftungskanals mit integriertem Beduftungskanal gemäß dem ersten Ausführungsbeispiel, und
- Fig. 2: eine schematische Darstellung der Ankopplung der Klimaanlage an den Belüftungskanal mit integriertem Beduftungskanal von Fig. 1 und eine Austrittsdüse.

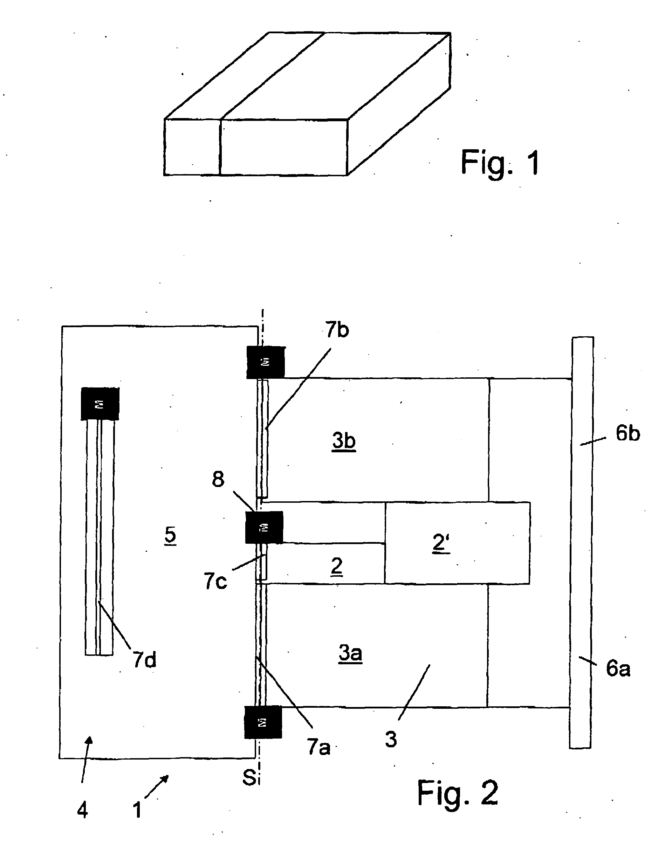

Eine Anordnung 1 gemäß dem ersten Ausführungsbeispiel weist einen Beduftungskanal 2 mit mindestens einem in einer in Fig. 2 nur angedeuteten Beduftungsvorrichtung 2' angeordneten Duftstoff auf, wobei der Beduftungskanal 2 der Anordnung 1 direkt, vorliegend im Wesentlichen mittig, in einen Belüftungskanal 3 einer Kraftfahrzeug-Klimaanlage 4 integriert ausgebildet ist. Die Beduftungsvorrichtung 2' kann auf an sich bekannte Weise ausgebildet sein, beispielsweise als Patrone mit lockerer Schüttung eines offenzelligen, mit dem Duftstoff getränkten Materials.

Der Belüftungskanal 3 führt klimatisierte Luft ausgehend vom Mischraum 5 der Klimaanlage 4 zu den Mitteldüsen 6 auf der Fahrerseite (Mitteldüse 6a) und der Beifahrerseite (Mitteldüse 6b), wobei ein mittlerer Abschnitt des Eintrittsquerschnitts in den Belüftungskanal 3 direkt durch den Beduftungskanal 2 gebildet wird. Hierbei ist der Beduftungskanal 2 samt Beduftungsvorrichtung 2' und Beduftungs-Klappe 7c samt Stellmotor 8 direkt als eine Baugruppe in den Belüftungskanal 3 eingesetzt und hierin fixiert. Die Beduftungsvorrichtung 2' ist von der Mitteldüsenseite her nach einem Ausbau der Mitteldüse zugänglich, um den Duftstoff zu wechseln.

Die Verteilung des vom Gebläse (nicht dargestellt) kommenden und die Klimaanlage 4, d.h. den Verdampfer und ggf. den Heizer durchströmenden Luftstroms erfolgt mittels Klappen 7a, 7b und 7c, wobei mit 7a die Klappe der Fahrerseite, mit 7b die Klappe der Beifahrerseite und mit 7c die dem Beduftungskanal 2 zugeordnete Klappe bezeichnet ist. Die Regelung der Beduftungskanal-Klappe 7c erfolgt gemäß dem ersten Ausführungsbeispiel unabhängig von den anderen Klappen mit Hilfe eines elektrischen Stellmotors 8, unter anderem in Abhängigkeit von der Abgabe des Duftstoffes in den Beduftungskanal 2 die Klappe 7c öffnet bzw. schließt. Die Klappe 7c kann gemäß dem vorliegenden Ausführungsbeispiel beliebige Zwischenstellungen einnehmen, so dass der Luftstrom durch den Beduftungskanal im Wesentlichen beliebig einstellbar ist.

Gemäß einem zweiten Ausführungsbeispiel, das nicht in der Zeichnung dargestellt ist, ist der Belüftungskanal in Längsrichtung unterteilt ausgebildet. Hierfür ist eine Trennwand etwas außermittig angeordnet, so dass sich zwei unterschiedlich große Kanalteile ergeben. In einen der Kanalteile ist die Beduftungsvorrichtung von einer Seite her eingeschoben und hierin fixiert, so dass er den Beduftungskanal bildet. Am luftanströmseitigen Ende dieses Kanalteils des Belüftungskanals, ist eine Klappe angeordnet, die mittels eines elektrischen Stellmotors betätigbar ist. Andere Klappen sind vor dem zweiten Teil des Belüftungskanals angeordnet, welcher allein die Funktion des (unbedufteten) Belüftungskanals übernimmt.

Eine derartige Ausgestaltung ermöglicht eine relativ kostengünstige Grundform ohne Beduftungsvorrichtung. Eine Aufrüstung ist einfach mittels Einsetzen einer entsprechenden Beduftungsvorrichtung und Anpassung der Regefungssoftware für die Beduftungsklappe möglich.

## Patentansprüche

1. Luftkanal in einer Kraftfahrzeug-Klimaanlage mit mindestens einer Längstrennwand zur Unterteilung des Luftkanals in mindestens einen Belüftungskanal (3) und mindestens einen Beduftungskanal (2), aufweisend mindestens eine Luftbehandlungsvorrichtung (2') zur Änderung der chemischen Zusammensetzung eines durch den Beduftungskanal (2) strömenden Luftstroms, wobei die Luftbehandlungsvorrichtung (2') in dem Beduftungskanal (2) angeordnet ist, der seinerseits in einem Belüftungskanal (3) angeordnet ist, wobei die Luftbehandlungsvorrichtung (2') eine Beduftungsvorrichtung (2') zur Anreicherung des durch den Beduftungskanal (2) strömenden Luftstroms mit einem oder mehreren Aromastoffen aufweist, **dadurch gekennzeichnet, dass** die Beduftungsvorrichtung (2') in einem luftabströmseitigen Bereich des Beduflungskanals (2) angeordnet ist.

2. Luftkanal nach einem der vorhergehenden Ansprüche, **dadurch gekennzeichnet, dass** die Luftbehandlungsvorrichtung an einer Austrittsöffnung des Beduftungskanals angeordnet ist

3. Luftkanal nach einem der vorhergehenden Ansprüche, **dadurch gekennzeichnet, dass** die Luftbehandlungsvorrichtung einen Luftionisator zur teilweisen oder vollständigen Ionisierung des durch den Beduftungskanal strömenden Luftstroms aufweist.

4. Luftkanal nach einem der vorhergehenden Ansprüche, **dadurch gekennzeichnet, dass** eine Eintrittsöffnung des mindestens einen Beduftungskanals in einer Ebene mit einer Eintrittsöffnung des mindestens einen Belüftungskanals angeordnet ist.

5. Luftkanal nach einem der vorhergehenden Ansprüche, **dadurch gekennzeichnet, dass** der Luftkanal mindestens ein erstes Luftstromsteuerelement, insbesondere eine erste Klappe, zur Steuerung des durch den Beduftungskanal strömenden Luftstroms aufweist.

6. Luftkanal nach Anspruch 5, **dadurch gekennzeichnet, dass** das mindestens eine erste Luftstromsteuerelement an einer Eintrittsöffnung und/oder an einer Austrittsöffnung des Beduftungskanals angeordnet ist.

7. Luftkanal nach einem der vorhergehenden Ansprüche, **dadurch gekennzeichnet, dass** der Luftkanal mindestens ein zweites Luftstromsteuerelement, insbesondere eine zweite Klappe, zur Steuerung eines durch den Belüftungskanal strömenden Luftstroms aufweist.

8. Luftkanal nach Anspruch 7, **dadurch gekennzeichnet, dass** das mindestens eine zweite Luftstromsteuerelement an einer Eintrittsöffnung und/oder an einer Austrittsöffnung des Belüftungskanals angeordnet ist.

9. Anordnung nach einem der vorhergehenden Ansprüche, **dadurch gekennzeichnet, dass** der Beduftungskanal insbesondere mittig zwischen zwei Belüftungskanälen angeordnet ist.

10. Kraftfahrzeug-Klimaanlage oder Belüftungsanlage, aufweisend einen Luftkanal nach einem der Ansprüche 1 bis 9.

11. Querträger für ein Kraftfahrzeug, aufweisend einen Luftkanal nach einem der Ansprüche 1 bis 9.

12. Luftaustrittsdüse, insbesondere Mitteldüse für ein Kraftfahrzeug, aufweisend einen Luftkanal nach einem der Ansprüche 1 bis 9.

13. Kraftfahrzeug, aufweisend einen Luftkanal nach einem der Ansprüche 1 bis 9.

## Claims

1. An air duct in a motor vehicle air conditioning system comprising at least one longitudinal partition wall for subdividing the air duct into at least one ventilation duct (3) and at least one fragrance duct (2) comprising at least one air treatment device (2') for changing the chemical composition of an air flow that flows through the fragrance duct (2), wherein the air treatment device (2') is disposed in the fragrance duct (2) which, in turn, is disposed in a ventilation duct to (3), wherein the air treatment device (2') comprises a fragrance device (2') for enriching the air flow that flows through the fragrance duct (2) with one or more aromatic substances, **characterized in that** the fragrance device (2') is disposed in a region of the fragrance duct (2) on the air outflow side.

2. The air duct according to one of the preceding claims, **characterized in that** the air treatment device is disposes at an outlet opening of the fragrance duct.

3. The air duct according to one of the preceding claims, **characterized in that** the air treatment device comprises an air ionizer for partially or completely ionizing the air flow that flows through the fragrance duct.

4. The air duct according to one of the preceding claims, characterizes in that an inlet opening of the at least one fragrance duct is disposed in a plane having an inlet opening of the at least one ventilation duct.

5. The air duct according to one of the preceding claims, **characterized in that** the air duct comprises at least one first air flow control element, in particular a first flap, for controlling the air flow that flows through the fragrance duct.

6. The air duct according to claim 5, **characterised in that** the at least one first air flow control element is disposed at an inlet opening and/or an outlet opening of the fragrance duct.

7. The air duct according to one of the preceding claims, **characterized in that** the air duct comprises at least, one second air flow control element, in particular a second flap, for controlling an air flow that flows through the ventilation duct.

8. The air duct according to claim 7, **characterized in that** the at least one second air flow control element is disposed at an inlet opening and/or an outlet opening of the ventilation duct.

9. A configuration according to one of the preceding claims, **characterized in that** the fragrance duct is disposed, in particular, in the center between two ventilation ducts.

10. A motor vehicle air conditioning system or ventilation system, comprising an air duct according to one of the claims 1 to 9.

11. A crossmember for a motor vehicle, comprising an air duct according to one of the claims 1 to 9.

12. An air outlet nozzle, in particular a middle nozzle for a motor vehicle, comprising an air duct according to one of the claims 1 to 9.

13. A motor vehicle comprising an air duct according to one of the claims 1 to 9.

## Revendications

1. Conduit d'air dans un système de climatisation d'un véhicule automobile, comprenant au moins une paroi de séparation longitudinale servant au partage du conduit d'air en au moines un conduit de ventilation (3) et au moins un conduit diffuseur d'arômes (2) présentant au moins un dispositif de traitement de l'air (2') servant à la modification de la composition chimique d'un flux d'air circulant à travers le conduit diffuseur d'arômes (2), ou le dispositif de traitement de l'air (2') est disposé dans le conduit diffuseur d'arômes (2) qui est disposé, quant à lui, dans un conduit de ventilation (3), où le dispositif de traitement de l'air (2') présente un dispositif diffuseur d'arômes (2') servant à l'enrichissement du flux d'air circulant à travers le conduit diffuseur d'arômes (2), en une ou plusieurs substances aromatiques,
**caractérisé en ce que** le dispositif diffuseur d'arômes (2') est disposé dans une zone, côté sortie d'air, du conduit diffuseur d'arômes (2).

2. Conduit d'air selon l'une ou l'autre des revendications précédentes, **caractérisé en ce que** le dispositif de traitement de l'air est disposé au niveau d'une ouverture de sortie du conduit diffuseur d'arômes.

3. Conduit d'air selon l'une ou l'autre des revendications précédentes, **caractérisé en ce que** le dispositif de traitement de l'air présente un ioniseur d'air servant à l'ionisation partielle ou totale du flux d'air circulant à travers le conduit diffuseur d'arômes.

4. Conduit d'air selon l'une quelconque des revendications précédentes, **caractérisé en ce qu'**une ouverture d'entrée du conduit diffuseur d'arômes au moins au nombre de un est disposé dans un plan comportant une ouverture d'entrée du conduit diffuseur d'arômes au moins au nombre de un.

5. Conduit d'air selon l'une quelconque des revendications précédentes, **caractérisé en ce que** le conduit d'air présente au moins un premier élément de régulation du flux d'air, en particulier un premier volet, servant à la régulation du flux d'air circulant à travers le conduit diffuseur d'arômes.

6. Conduit d'air selon la revendication 5, **caractérisé en ce que** le premier élément de régulation du flux d'air au moins au nombre de un est disposé au niveau d'une ouverture d'entrée et /ou d'une ouverture de sortie du conduit diffuseur d'arômes,

7. Conduit d'air selon l'une quelconque des revendications précédentes, **caractérisé en ce que** le conduit d'air présente au moins un deuxième élément de régulation du flux d'air, en particulier un deuxième volet, servant à la régulation d'un flux d'air circulant à travers le conduit de ventilation.

8. Conduit d'air selon la revendication 7, **caractérisé en ce que** le deuxième élément de régulation du flux d'air au moins au nombre de un est disposé au niveau d'une ouverture d'entrée et / ou d'une ouverture de sortie du conduit de ventilation.

9. Dispositif selon l'une quelconque des revendications précédentes, **caractérisé en ce que** le conduit diffuseur d'arômes est disposé en particulier au milieu, entre deux conduits de ventilation.

10. Système de climatisation ou système de ventilation d'un véhicule automobile présentant un conduit d'air selon l'une quelconque des revendications 1 à 9.

11. Traverse pour an véhicule automobile, présentant un conduit d'air selon l'une quelconque des revendications 1 à 9.

12. Buse de sortie d'air, en particulier buse centrale pour un véhicule automobile, présentant un conduit d'air selon l'une quelconque des revendications 1 à 9.

13. Véhicule automobile présentant un conduit d'air selon l'une quelconque des revendications 1 à 9.
